# EUROPÄISCHE PATENTSCHRIFT

(11) **EP 1 071 509 B1**
(45) Veröffentlichungstag und Bekanntmachung des Hinweises auf die Patenterteilung: **07.05.2003**
(21) Anmeldenummer: 99910277.5
(22) Anmeldetag: 25.02.1999
(51) Int. Cl.: B01J 27/26, B01J 31/06, C08G 65/10

(54) **VERBESSERTE DOPPELMETALLCYANID-KATALYSATOREN FÜR DIE HERSTELLUNG VON POLYETHERPOLYOLEN**
IMPROVED DOUBLE METAL CYANIDE CATALYSTS FOR PRODUCING POLYETHER POLYOLS
CATALYSEURS CYANURES DIMETALLIQUES PERFECTIONNES POUR LA PREPARATION DE POLYOLS DE POLYETHER

(30) Priorität: 10.03.1998 DE 19810269
(43) Veröffentlichungstag der Anmeldung: 31.01.2001
(73) Patentinhaber: BAYER AG, 51368 Leverkusen (DE)
(72) Erfinder: HOFMANN, Jörg, D-47829 Krefeld (DE); OOMS, Pieter, D-47800 Krefeld (DE); GUPTA, Pramod, D-50181 Bedburg (DE); SCHÄFER, Walter, D-42799 Leichlingen (DE)
(86) Internationale Anmeldenummer: EP9901203
(87) Internationale Veröffentlichungsnummer: WO99046042

(56) Entgegenhaltungen:
- EP-A- 0 761 708
- US-A- 5 627 120

## Beschreibung

Die Erfindung betrifft neue, verbesserte Doppelmetallcyanid (DMC)-Katalysatoren für die Herstellung von Polyetherpolyolen durch Polyaddition von Alkylenoxiden an aktive Wasserstoffatome aufweisende Starterverbindungen.

Doppelmetallcyanid (DMC)-Katalysatoren für die Polyaddition von Alkylenoxiden an aktive Wasserstoffatome aufweisende Starterverbindungen sind bekannt (siehe beispielsweise US 3 404 109, US 3 829 505, US 3 941 849 und US 5 158 922). Der Einsatz dieser DMC-Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren, wie Alkalihydroxiden. Die so erhaltenen Polyetherpolyole können zu hochwertigen Polyurethanen (z.B. Elastomere, Schäume, Beschichtungen) verarbeitet werden. DMC-Katalysatoren werden gewöhnlich erhalten, indem man eine wässrige Lösung eines Metallsalzes mit der wässrigen Lösung eines Metallcyanidsalzes in Gegenwart eines niedermolekularen organischen Komplexliganden, z.B. eines Ethers, umsetzt. In einer typischen Katalysatorpräparation werden beispielsweise wässrige Lösungen von Zinkchlorid (im Überschuß) und Kaliumhexacyanocobaltat gemischt und anschließend Dimethoxyethan (Glyme) zur gebildeten Suspension gegeben. Nach Filtration und Waschen des Katalysators mit wässriger Glyme-Lösung wird ein aktiver Katalysator der allgemeinen Formel

Zn₃[Co(CN)₆]₂ • x ZnCl₂ • yH₂O • z Glyme

erhalten (siehe z.B. EP 700 949).

Aus US 5 482 908, US 5 536 883 und EP 700 949 sind verbesserte DMC-Katalysatoren bekannt, die neben der Doppelmetallcyanidverbindung und dem organischen Komplexliganden zusätzlich einen Polyether mit zahlenmittlerem Molekulargewicht größer als 500 enthalten. Die verbesserten DMC-Katalysatoren besitzen außerordentlich hohe Aktivität und ermöglichen die Herstellung von Polyetherpolyolen bei sehr geringen Katalysatoreinsätzen (25 ppm; siehe Beispiel 8 in EP 700 949). Die in US 5 482 908, US 5 536 883 und EP 700 949 beschriebenen hochaktiven DMC-Katalysatorformulierungen enthalten als Polyether bevorzugt Polyetherpolyole mit Hydroxy-Funktionalitäten von 2 bis 8. Nützliche Polyetherpolyole für den Einsatz in den verbesserten DMC-Katalysatoren sind Poly(oxypropylen)polyole, EO-getippte Poly(oxypropylen)polyole, gemischte EO/PO-Polyole, Butylenoxid-Polymere, Butylenoxid-Copolymere mit Ethylenoxid und/oder Propylenoxid und Poly(tetramethylenether)glykole. Besonders bevorzugt sind Poly(oxypropylen)polyole (siehe Seite 4, Zeilen 8 - 12 in EP 700 949, Spalte 4, Zeilen 26 -34 in US 5 482 908 und Spalte 4, Zeilen 32 - 40 in US 5 536 883). Dagegen werden Polyethylenglykole, d.h. reine Ethylenoxid-Polyetherpolyole als allgemein nicht nützlich zur Herstellung der verbesserten, hochaktiven DMC-Katalysatoren bezeichnet (siehe Seite 4, Zeilen 10 - 11 in EP 700 949, Spalte 4, Zeilen 31 - 32 in US 5 482 908 und Spalte 4, Zeilen 37 - 38 in US 5 536 883).

Aus US 5 627 120 und WO 97/40086 sind weitere hochaktive DMC-Katalysatoren bekannt, die neben der Doppelmetallcyanidverbindung und dem organischen Komplexliganden einen Polyether mit zahlenmittlerem Molekulargewicht kleiner als 500 enthalten. Interessanterweise werden zur Herstellung der in US 5 627 120 und WO 97/40086 beschriebenen DMC-Katalysatoren besonders bevorzugt auch Polyethylenglykole mit zahlenmittlerem Molekulargewicht kleiner als 500 eingesetzt (siehe Spalte 3, Zeilen 57-60 in US 5 627 120 und Seite 7, Zeilen 8-10 in WO 97/40086).

Aufgabe der vorliegenden Erfindung ist es nun, weiter verbesserte DMC-Katalysatoren für die Polyaddition von Alkylenoxiden an entsprechende Starterverbindungen zur Verfügung zu stellen, die eine im. Hinblick auf die bislang bekannten Katalysatortypen deutlich erhöhte Katalysatoraktivität aufweisen. Idealerweise kann durch die erhöhte Aktivität der Katalysator dann in so geringen Konzentrationen (15 ppm oder weniger) eingesetzt werden, daß eine ansonsten aufwendige Katalysatorabtrennung nicht mehr notwendig ist, und das Produkt direkt für Polyurethan-Anwendungen verwendet werden kann.

Überraschend wurde jetzt gefunden, daß DMC-Katalysatoren, die eine Doppelmetallcyanid-Verbindung, einen organischen Komplexliganden und 5 bis 80 Gew.-%, bezogen auf die Menge des Katalysators, eines Ethylenoxid-Polyethers mit zahlenmittlerem Molekulargewicht größer als 500 enthalten, stark erhöhte Aktivität für die Polyaddition von Alkylenoxiden an aktive Wasserstoffatome aufweisende Starterverbindungen besitzen und die Polyetherpolyol-Herstellung deshalb bei sehr geringen Katalysatorkonzentrationen (15 ppm oder weniger) ermöglichen.

Gegenstand der vorliegenden Erfindung sind daher neue, verbesserte Doppelmetallcyanid (DMC)-Katalysatoren, enthaltend
a) eine Doppelmetallcyanid-Verbindung sowie
b) einen von c) verschiedenen organischen Komplexliganden,
die dadurch gekennzeichnet sind, daß sie 5 bis 80 Gew.-%, bezogen auf die Menge des fertigen Katalysators, eines c) Ethylenoxid-Polyethers mit zahlenmittlerem Molekulargewicht größer als 500 enthalten.

In den erfindungsgemäßen Katalysatoren können gegebenenfalls noch 1 bis 10 Gew.-% Wasser und/oder 5 bis 25 Gew.-% wasserlösliches Metallsalz aus der Herstellung der Doppelmetallcyanid-Verbindung enthalten sein.

Die für die erfindungsgemäßen Katalysatoren geeigneten Doppelmetallcyanid-Verbindungen a) sind die Reaktionsprodukte eines wasserlöslichen Metallsalzes und eines wasserlöslichen Metallcyanidsalzes.

Das wasserlösliche Metallsalz besitzt bevorzugt die allgemeine Formel M(X)ₙ, wobei M ausgewählt wird aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). X ist ein Anion, bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Beispiele geeigneter Metallsalze sind Zinkchlorid, Zinkbromid, Zinkacetat, Zinkacetylacetonat, Zinkbenzoat, Zinknitrat, Eisen(II)sulfat, Eisen(II)bromid, Eisen(II)-chlorid, Cobalt(II)chlorid, Cobalt(II)thiocyanat, Nickel(II)chlorid und Nickel-(II)nitrat. Es können auch Mischungen verschiedener Metallsalze eingesetzt werden.

Das wasserlösliche Metallcyanidsalz besitzt bevorzugt die allgemeine Formel (Y)ₐ M'(CN)_{b} (A)_{c}, wobei M' ausgewählt wird aus den Metallen Fe(II), Fe(III), Co(II), Co(III), Cr(II), Cr(III), Mn(II), Mn(III), Ir(III), Ni(II), Rh(III), Ru(II), V(IV) und V(V). Besonders bevorzugt wird M' ausgewählt aus den Metallen Co(II), Co(III), Fe(II), Fe(III), Cr(III), Ir(III) und Ni(II). Das wasserlösliche Metallcyanidsalz kann eines oder mehrere dieser Metalle enthalten. Y ist ein Alkalimetallion oder ein Erdalkalimetallion. A ist ein Anion, ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Sowohl a, als auch b sind ganzzahlig (≥ 1), wobei die Werte für a, b und c so gewählt sind, daß die Elektroneutralität des Metallcyanidsalzes gewährleistet ist; c besitzt bevorzugt den Wert 0. Beispiele geeigneter wasserlöslicher Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Beispiele geeigneter Doppelmetallcyanid-Verbindungen a), die in den erfindungsgemäßen Katalysatoren verwendet werden können, sind Zinkhexacyanocobaltat(III), Zinkhexacyanoferrat(II), Zinkhexacyanoferrat(III), Nickel(II)hexacyanoferrat(II) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Bevorzugt verwendet wird Zinkhexacyanocobaltat(III).

Die erfindungsgemäßen DMC-Katalysatoren enthalten einen organischen Komplexliganden b), da dieser z.B. die katalytische Aktivität erhöht. Geeignete organische Komplexliganden sind im Prinzip bekannt und ausführlich in dem zuvor angegebenen Stand der Technik beschrieben (siehe z.B. Spalte 6, Zeilen 9 - 65 in US 5 158 922). Der Komplexligand wird entweder während der Katalysatorpräparation zugegeben oder unmittelbar nach der Ausfällung des Katalysators. Gewöhnlich wird der Komplexligand im Überschuß eingesetzt. Bevorzugte Komplexliganden sind wasserlösliche, organische Verbindungen mit Heteroatomen, die mit der Doppelmetallcyanid-Verbindung Komplexe bilden können. Geeignete organische Komplexliganden sind z.B. Alkohole, Aldehyde, Ketone, Ether, Ester, Amide, Harnstoffe, Nitrile, Sulfide und deren Mischungen. Bevorzugte organische Komplexliganden sind wasserlösliche aliphatische Alkohole, wie z.B. Ethanol, Isopropanol, n-Butanol, iso-Butanol, sek.-Butanol und tert.-Butanol. Besonders bevorzugt ist tert.-Butanol.

Die erfindungsgemäßen DMC-Katalysatoren enthalten die Doppelmetallcyanid-Verbindungen in Mengen von 20 bis 90 Gew.-%, bevorzugt 25 bis 80 Gew.-%, bezogen auf Menge des fertigen Katalysators, und die organischen Komplexliganden in Mengen von 1 bis 30, bevorzugt 2 bis 20 Gew.-%. wiederum bezogen auf die Menge des fertigen Katalysators.

Die erfindungsgemäßen DMC-Katalysatoren enthalten 5 bis 80 Gew.-%, bezogen auf die Menge des fertigen Katalysators, eines Ethylenoxid-Polyethers mit zahlenmittlerem Molekulargewicht größer als 500. Bevorzugte Katalysatoren enthalten 10 bis 60 Gew.-% des Ethylenoxid-Polyethers.

Für die Herstellung der erfindungsgemäßen Katalysatoren geeignete Ethylenoxid-Polyether sind höhermolekulare Substanzen mit dem charakteristischen Strukturmerkmal der Oxyethylengruppe -O-CH₂-CH₂- als wiederkehrende Einheit in der Kette. Sie werden in der Regel durch ringöffnende Polymerisation von Ethylenoxid (Oxiran) mit Katalysatoren wie beispielsweise Lewis-Säuren (z.B. Bortrifluorid, Zinntetrachlorid, Zinkdichlorid), Alkylzink- oder Alkylaluminium-Verbindungen, Strontium- oder Calciumcarbonat, Calciumamid, Calciumamidalkoxid, Alkali- oder Erdalkalimetallhydroxiden, Alkanolaten oder Phenolaten erhalten.

Methoden zur Herstellung von Ethylenoxid-Polyethern sind allgemein gut bekannt und beispielsweise ausführlich beschrieben in "Houben-Weyl, Methoden der organischen Chemie", Band 14/2, Makromolekulare Stoffe, 4. Auflage, 1963, S. 425 - 453, "Houben-Weyl, Methoden der organischen Chemie", Band E20, Makromolekulare Stoffe, 4. Auflage, 1987, S. 1367 - 1368 und "Encyclopedia of Polymer Science and Engineering", Vol. 6, 2nd Edition, 1987, S. 225 - 230 und 234 - 254.

Die Ethylenoxid-Polyether können beliebige Endgruppen besitzen, insbesondere Hydroxy-, Amino-, Ester-, Säure-, Säureamid-, oder Ether-Endgruppen, bevorzugt Hydroxy-, Ester-, oder Ether-Endgruppen.

Bevorzugt eingesetzt werden Hydroxy-Endgruppen aufweisende Ethylenoxid-Polyether mit Hydroxyfunktionalitäten von 1 bis 8, besonders bevorzugt von 1 bis 3, und zahlenmittleren Molekulargewichten zwischen 500 und 10⁷, besonders bevorzugt zwischen 500 und 5·10⁴. Sie werden in der Regel durch Ringöffungspolymerisation von Ethylenoxid in Gegenwart entsprechender aktive Wasserstoffatome aufweisende Starterverbindungen erhalten.

Außer Ethylenoxid-Homopolymeren können auch Blockcopolymere eingesetzt werden, in denen Blöcke aus Polyvinyl-Verbindungen (z.B. Polystyrol, Poly(α-methylstyrol), Polymethylmethacrylat, Polybutylmethacrylat) verknüpft sind mit Polyethylenoxid-Blöcken mit zahlenmittlerem Molekulargewicht größer als 500.

Es können auch beliebige Mischungen der vorgenannten Ethylenoxid-Polyether eingesetzt werden.

Die Analyse der Katalysatorzusammensetzung erfolgt üblicherweise mittels Elementaranalyse, Thermogravimetrie und extraktiver Entfernung des Ethylenoxid-Polyetheranteils mit anschließender gravimetrischer Bestimmung.

Die erfindungsgemäßen Katalysatoren können kristallin, teilkristallin oder amorph sein. Die Analyse der Kristallinität erfolgt üblicherweise durch Pulverröntgendiffraktometrie.

Die Herstellung der erfindungsgemäßen, verbesserten DMC-Katalysatoren erfolgt üblicherweise in wässriger Lösung durch Umsetzung von Metallsalz (im Überschuß) und Metallcyanidsalz in Gegenwart des organischen Komplexliganden und des Ethylenoxid-Polyethers.

Bevorzugt werden dabei zunächst die wässrigen Lösungen des Metallsalzes (z.B. Zinkchlorid, eingesetzt im stöchiometrischen Überschuß (mindestens 50 % bezogen auf das Metallcyanidsalz)) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), überschüssiges Metallsalz, Wasser und den organischen Komplexliganden enthält.

Der organische Komplexligand kann dabei entweder in einer oder in beiden wässrigen Lösungen vorhanden sein, oder er wird der Suspension unmittelbar nach Ausfällung der Doppelmetallcyanid-Verbindung zugegeben. Es hat sich als vorteilhaft erwiesen, die wässrigen Lösungen und den organischen Komplexliganden unter starkem Rühren zu vermischen.

Die gebildete Suspension wird anschließend mit dem Ethylenoxid-Polyether behandelt. Der Ethylenoxid-Polyether wird dabei bevorzugt in einer Mischung mit Wasser und organischem Komplexliganden eingesetzt.

Die Isolierung des den Ethylenoxid-Polyether enthaltenen Katalysators aus der Suspension erfolgt durch bekannte Techniken, wie z.B. Zentrifugation oder Filtration.

Zur Steigerung der Aktivität des Katalysators ist es vorteilhaft, den isolierten Katalysator anschließend mit einer wässrigen Lösung des organischen Komplexliganden zu waschen (z.B. durch Resuspendieren und anschließende erneute Isolierung durch Filtration oder Zentrifugation). Auf diese Weise können zum Beispiel wasserlösliche Nebenprodukte, wie Kaliumchlorid, die die Polyadditionsreaktion negativ beeinflussen, aus dem erfindungsgemäßen Katalysator entfernt werden.

Bevorzugt liegt die Menge des organischen Komplexliganden in der wässrigen Waschlösung zwischen 40 und 80 Gew.-%. Weiterhin ist es vorteilhaft, der wässrigen Waschlösung etwas Ethylenoxid-Polyether, bevorzugt im Bereich zwischen 0,5 und 5 Gew.-%, zuzufügen.

Außerdem ist es vorteilhaft, den Katalysator mehr als einmal zu waschen. Hierzu kann z.B. der erste Waschvorgang wiederholt werden. Bevorzugt ist es aber, für weitere Waschvorgänge nichtwässrige Lösungen zu verwenden, z.B. eine Mischung aus organischem Komplexliganden und Ethylenoxid-Polyether.

Der gewaschene Katalysator wird abschließend, gegebenenfalls nach Pulverisierung, bei Temperaturen von 20 bis 100°C und bei Drücken von 0,1 mbar bis Normaldruck (1013 mbar) getrocknet.

Ein weiterer Gegenstand ist die Verwendung der erfindungsgemäßen, verbesserten DMC-Katalysatoren zur Herstellung von Polyetherpolyolen durch Polyaddition von Alkylenoxiden an aktive Wasserstoffatome aufweisende Starterverbindungen.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder aber auch statistisch oder blockweise mit 2 oder 3 unterschiedlichen monomeren Epoxiden erfolgen. Näheres ist "Ullmanns Encyclopädie der industriellen Chemie", englisch-sprachige Ausgabe, 1992, Band A21, Seiten 670 - 671, zu entnehmen.

Als aktive Wasserstoffatome aufweisende Starterverbindungen werden Verbindungen mit Molekulargewichten von 18 bis 2000 und 1 bis 8 Hydroxylgruppen eingesetzt. Beispielsweise werden genannt: Ethylenglykol, Diethylenglykol, Triethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke und Wasser.

Vorteilhafterweise werden solche aktive Wasserstoffatome aufweisende Starterverbindungen eingesetzt, die z.B. durch konventionelle Alkalikatalyse aus den zuvor genannten niedermolekularen Startern hergestellt wurden und oligomere Alkoxylierungsprodukte darstellen mit Molekulargewichten von 200 bis 2000.

Die durch die erfindungsgemäßen Katalysatoren katalysierte Polyaddition von Alkylenoxiden an aktive Wasserstoffatome aufweisende Starterverbindungen erfolgt im allgemeinen bei Temperaturen von 20 bis 200°C, bevorzugt im Bereich von 40 bis 180°C. besonders bevorzugt bei Temperaturen von 50 bis 150°C. Die Reaktion kann bei Gesamtdrücken von 0,001 bis 20 bar durchgerührt werden. Die Polyaddition kann in Substanz oder einem inerten, organischen Lösungsmittel, wie Toluol und/oder THF, durchgeführt werden. Die Menge an Lösungsmittel beträgt üblicherweise 10 bis 30 Gew.-%, bezogen auf die Menge des herzustellenden Polyetherpolyols.

Die Katalysatorkonzentration wird so gewählt, daß unter den gegebenen Reaktionsbedingungen eine gute Beherrschung der Polyadditionsreaktion möglich ist. Die Katalysatorkonzentration liegt im allgemeinen im Bereich von 0,0005 Gew.-% bis 1 Gew.-%, bevorzugt im Bereich von 0,001 Gew.-% bis 0,1 Gew.-%, bezogen auf die Menge des herzustellenden Polyetherpolyols.

Die Reaktionszeiten für die Polyaddition liegen im Bereich von wenigen Minuten bis zu mehreren Tagen.

Die Molekulargewichte der nach dem erfindungsgemäßen Verfahren hergestellten Polyetherpolyole liegen im Bereich von 500 bis 100000 g/mol, bevorzugt im Bereich von 1000 bis 50000 g/mol, besonders bevorzugt im Bereich von 2000 bis 20000 g/mol.

Die Polyaddition kann kontinuierlich, in einem Batch- oder im Semibatchverfahren durchgeführt werden.

Die erfindungsgemäßen Katalysatoren benötigen im allgemeinen eine Induktionszeit von einigen Minuten bis zu mehreren Stunden.

Mit Hilfe der neuen erfindungsgemäßen Katalysatoren werden die Induktionszeiten bei der Polyetherpolyol-Herstellung im Vergleich zu den bislang bekannten DMC-Katalysatoren im allgemeinen verkürzt.

Aufgrund wesentlich erhöhter katalytischer Aktivität werden die Alkoxylierungszeiten beim Einsatz der neuen erfindungsgemäßen Katalysatoren im Vergleich zu bislang bekannten hochaktiven DMC-Katalysatoren stark reduziert.

Dies führt beispielsweise zu einer Verkürzung der Gesamtreaktionszeiten (Summe aus Induktions- und Alkoxylierungszeiten) um etwa 25 - 60 % im Vergleich zu den in US 5 482 908, US 5 536 883 und EP 700 949 beschriebenen DMC-Katalysatoren (siehe Beispiele 7 - 10 und Vergleichsbeispiel 11).

Die erfindungsgemäßen Katalysatoren können wegen ihrer deutlich erhöhten Aktivität problemlos in so niedrigen Konzentrationen eingesetzt werden (15 ppm und weniger, siehe Beispiele 7 - 10), daß generell für den Einsatz in Polyurethan-Anwendungen auf eine Entfernung des Katalysators aus dem Polyol verzichtet werden kann, ohne daß die Produktqualitäten nachteilig beeinflußt werden.

### Beispiele

### Katalysatorpräparation

### Beispiel 1

Herstellung eines DMC-Katalysators mit Einsatz eines Polyethylenglykols mit zahlenmittlerem Molekulargewicht 2000 (Katalysator A).

Zu einer Lösung aus 4 g (12 mMol) Kaliumhexacyanocobaltat in 70 ml destilliertem Wasser gibt man unter starkem Rühren (24000 U/min) eine Lösung aus 12,5 g (91,5 mMol) Zinkchlorid in 20 ml destilliertem Wasser. Unmittelbar danach wird eine Mischung aus 50 g tert.-Butanol und 50 g destilliertem Wasser zur gebildeten Suspension gegeben und anschließend 10 min stark gerührt (24000 U/min). Dann wird eine Mischung aus 1 g eines Polyethylenglykols mit zahlenmittlerem Molekulargewicht 2000, 1 g tert.-Butanol und 100 g destilliertem Wasser zugegeben und 3 min gerührt (1000 U/min). Der Feststoff wird durch eine Filtration isoliert, dann 10 min mit einer Mischung aus 70 g tert.-Butanol, 30 g destilliertem Wasser und 1 g des obigen Polyethylenglykols gerührt (10000 U/min) und erneut filtriert. Abschließend wird noch einmal 10 min mit einer Mischung aus 100 g tert.-Butanol und 0,5 g des obigen Polyethylenglykols gerührt (10000 U/min). Nach Filtration wird der Katalysator bei 50°C und Normaldruck bis zur Gewichtskonstanz getrocknet.

Ausbeute an getrocknetem, pulverförmigem Katalysator: 5,97 g

Elementaranalyse, Thermogravimetrische Analyse und Extraktion:
Cobalt = 10,0 %, Zink = 22,0 %, tert.-Butaqanol = 4,2 %, Ethylenoxid-Polyether = 41,1 %

### Beispiel 2

Herstellung eines DMC-Katalysators mit Einsatz eines auf Stearylalkohol gestarteten Ethylenoxid-Polyethers mit zahlenmittlerem Molekulargewicht 2470 (Katalysator B).

Wie Beispiel 1, jedoch mit:
Einsatz eines auf Stearylalkohol gestarteten Ethylenoxid-Polyethers mit zahlenmittlerem Molekulargewicht 2470 anstelle des Ethylenoxid-Polyethers aus Beispiel 1.

Ausbeute an getrocknetem, pulverförmigem Katalysator: 6,06 g

Elementaranalyse, Thermogravimetrische Analyse und Extraktion:
Cobalt = 9,1 %, Zink = 21,0 %, tert.-Butanol = 3,9 %, Ethylenoxid-Polyether = 31,0 %

### Beispiel 3

Herstellung eines DMC-Katalysators mit Einsatz von auf Fettalkoholgemisch (C₁₂₋₁₈) gestarteten Ethylenoxid-Polyethers mit zahlenmittlerem Molekulargewicht 720 (Katalysator C).

Wie Beispiel 1, jedoch mit:
Einsatz von auf Fettalkoholgemisch (C₁₂₋₁₈) gestarteten Ethylenoxid-Polyethers mit zahlenmittlerem Molekulargewicht 720 anstelle des Ethylenoxid-Polyethers aus Beispiel 1.

Ausbeute an getrocknetem, pulverförmigem Katalysator: 5,40 g

Elementaranalyse, Thermogravimetrische Analyse und Extraktion:
Cobalt = 10,7 %, Zink = 24,1 %, tert.-Butanol = 4,8 %, Ethylenoxid-Polyether = 29,3 %

### Beispiel 4

Herstellung eines DMC-Katalysators mit Einsatz eines Polystyrol-Polyethylenoxid-AB-Blockcopolymers (zahlenmittleres Molekulargewicht des Polystyrol- und Polyethylenoxid-Segmentes jeweils 1000) (Katalysator D).

Wie Beispiel 1, jedoch mit:
Einsatz eines Polystyrol-Polyethylenoxid-AB-Blockcopolymers (zahlenmittleres Molekulargewicht des Polystyrol- und Polyethylenoxid-Segmentes jeweils 1000; Fa. Th. Goldschmidt AG) anstelle des Ethylenoxid-Polyethers aus Beispiel 1.

Ausbeute an getrocknetem, pulverförmigem Katalysator: 6,36 g

Elementaranalyse, Thermogravimetrische Analyse und Extraktion:
Cobalt = 9,1 %, Zink = 20,4 %, tert.-Butanol = 4,6 %, Ethylenoxid-Polyether = 27,5 %

### Vergleichsbeispiel 5

Herstellung eines DMC-Katalysators mit Einsatz eines Polypropylenglykols mit zahlenmittlerem Molekulargewicht 2000 (Katalysator E, Synthese gemäß EP 700 949).

Eine Lösung von 12,5 g (91,5 mMol) Zinkchlorid in 20 ml destilliertem Wasser gibt man unter starkem Rühren (24000 U/min) zu einer Lösung von 4 g (12 mMol) Kaliumhexacyanocobaltat in 70 ml destilliertem Wasser. Sofort danach wird eine Mischung aus 50 g tert.-Butanol und 50 g destilliertem Wasser zur gebildeten Suspension gegeben und anschließend 10 min stark gerührt (24000 U/min). Dann wird eine Mischung aus 1 g eines Polypropylenglykols mit zahlenmittlerem Molekulargewicht 2000, 1 g tert.-Butanol und 100 g destilliertem Wasser zugegeben und 3 min gerührt (1000 U/min). Der Feststoff wird durch eine Filtration isoliert, dann 10 min mit einer Mischung aus 70 g tert.-Butanol, 30 g destilliertem Wasser und 1 g des obigen Polypropylenglykols gerührt (10000 U/min) und erneut filtriert. Abschließend wird noch einmal 10 min mit einer Mischung aus 100 g tert.-Butanol und 0,5 g des obigen Polypropylenglykols gerührt (10000 U/min). Nach Filtration wird der Katalysator bei 50°C und Normaldruck bis zur Gewichtskonstanz getrocknet.

Ausbeute an getrocknetem, pulverförmigem Katalysator: 6,23 g

Elementaranalyse und Thermogravimetrische Analyse:
Cobalt = 11,6 %, Zink = 24,6 %, tert.-Butanol = 3,0 %, Polypropylenglykol = 25,8 %

### Vergleichsbeispiel 6

Herstellung eines DMC-Katalysators mit Einsatz eines Polyethylenglykols mit zahlenmittlerem Molekulargewicht 300 (Katalysator F).

Wie Beispiel 1, jedoch mit:
Einsatz eines Polyethylenglykols mit zahlenmittlerem Molekulargewicht 300 (Fa. Aldrich) anstelle des Ethylenoxid-Polyethers aus Beispiel 1.

Ausbeute an getrocknetem, pulverförmigem Katalysator: 5,63 g

Elementaranalyse, Thermogravimetrische Analyse und Extraktion:
Cobalt = 10,0 %, Zink = 24,0 %, tert.-Butanol = 3,8 %, Ethylenoxid-Polyether = 32,3 %

### Herstellung von Polyetherpolyolen

### Allgemeine Durchführung

In einem 500 ml Druckreaktor werden 50 g Polypropylenglykol-Starter (Molekulargewicht = 1000 g/mol) und 3 mg Katalysator (15 ppm, bezogen auf die Menge des herzustellenden Polyols) unter Schutzgas (Argon) vorgelegt und unter Rühren auf 105°C aufgeheizt. Anschließend wird Propylenoxid (ca. 5 g) auf einmal zudosiert, bis der Gesamtdruck auf 2,5 bar angestiegen ist. Weiteres Propylenoxid wird erst dann wieder zudosiert, wenn ein beschleunigter Druckabfall im Reaktor beobachtet wird. Dieser beschleunigte Druckabfall zeigt an, daß der Katalysator aktiviert ist. Anschließend wird das restliche Propylenoxid (145 g) kontinuierlich bei einem konstanten Gesamtdruck von 2,5 bar zudosiert. Nach vollständiger Propylenoxid-Dosierung und 5 Stunden Nachreaktionszeit bei 105°C werden flüchtige Anteile bei 90°C (1 mbar) abdestilliert und anschließend auf Raumtemperatur abgekühlt.

Die erhaltenen Polyetherpolyole wurden durch Ermittlung der OH-Zahlen, der Doppelbindungsgehalte und der Viskositäten charakterisiert.

Der Reaktionsverlauf wurde anhand von Zeit-Umsatz-Kurven (Propylenoxid-Verbrauch [g] vs. Reaktionszeit [min] verfolgt.

Die Induktionszeiten wurden aus dem Schnittpunkt der Tangente an den steilsten Punkt der Zeit-Umsatz-Kurve mit der verlängerten Basislinie der Kurve bestimmt.

Die für die Katalysatoraktivität maßgeblichen Propoxylierungszeiten entsprechen dem Zeitraum zwischen Katalysatoraktivierung (Ende der Induktionsperiode) und dem Ende der Propylenoxid-Dosierung.

Die Gesamtreaktionszeit ist die Summe aus Induktions- und Propoxylierungszeit.

### Beispiel 7

| Herstellung von Polyetherpolyol mit Katalysator A (15 ppm) | | |
|---|---|---|
| Gesamtreaktionszeit | | 395 min |
| Polyetherpolyol | OH-Zahl (mg KOH/g) | 29,8 |
| | Doppelbindungsgehalt (mMol/kg) | 11 |
| | Viskosität 25°C (mPas) | 935 |

### Beispiel 8

| Herstellung von Polyetherpolyol mit Katalysator B (15 ppm) | | |
|---|---|---|
| Gesamtreaktionszeit | | 475 min |
| Polyetherpolyol | OH-Zahl (mg KOH/g) | 29,2 |
| | Doppelbindungsgehalt (mMol/kg) | 8 |
| | Viskosität 25°C (mPas) | 944 |

### Beispiel 9

| Herstellung von Polyetherpolyol mit Katalysator C (15 ppm) | | |
|---|---|---|
| Gesamtreaktionszeit | | 655 min |
| Polyetherpolyol | OH-Zahl (mg KOH/g) | 29,8 |
| | Doppelbindungsgehalt (mMol/kg) | 7 |
| | Viskosität 25°C (mPas) | 950 |

### Beispiel 10

| Herstellung von Polyetherpolyol mit Katalysator D (15 ppm) | | |
|---|---|---|
| Gesamtreaktionszeit | | 595 min |
| Polyetherpolyol | OH-Zahl (mg KOH/g) | 29,3 |
| | Doppelbindungsgehalt (mMol/kg) | 10 |
| | Viskosität 25°C (mPas) | 958 |

Beispiele 7 - 10 zeigen, daß die neuen, erfindungsgemäßen DMC-Katalysatoren aufgrund ihrer außerordentlich hohen Aktivität bei der Polyetherpolyol-Herstellung in so geringen Konzentrationen eingesetzt werden können, daß auf eine Abtrennung des Katalysators aus dem Polyol verzichtet werden kann.

### Vergleichsbeispiel 11

| Herstellung von Polyetherpolyol mit Katalysator E (15 ppm) | | |
|---|---|---|
| Gesamtreaktionszeit | | 895 min |
| Polyetherpolyol | OH-Zahl (mg KOH/g) | 29,8 |
| | Doppelbindungsgehalt (mMol/kg) | 6 |
| | Viskosität 25°C (mPas) | 955 |

Ein Vergleich zwischen dem Beispiel 7 und Vergleichsbeispiel 11 zeigt, daß die neuen, erfindungsgemäßen, einen organischen Komplexliganden (tert.-Butanol) und ein Polyethylenglykol enthaltenden DMC-Katalysatoren wesentlich aktiver sind als bislang bekannte, hochaktive DMC-Katalysatoren, die einen organischen Komplexliganden (tert.-Butanol) und ein Polypropylenglykol (mit gleichem zahlenmittlerem Molekulargewicht wie das in den erfindungsgemäßen Katalysatoren eingesetzte Polyethylenglykol) enthalten. Die Polyetherpolyol-Herstellung mit den neuen, erfindungsgemäßen Katalysatoren ist deshalb in deutlich verkürzten Gesamtreaktionszeiten möglich.

### Vergleichsbeispiel 12

| Herstellung von Polyetherpolyol mit Katalysator F (15 ppm) | |
|---|---|
| Gesamtreaktionszeit: (Katalysatordesaktivierung im Verlaufe der Reaktion) | > 900 min |

Vergleichsbeispiel 12 zeigt, daß die aus US 5 627 120 und WO 97/40086 bekannten DMC-Katalysatoren, die neben der Doppelmetallcyanidverbindung und dem organischen Komplexliganden ein Polyethylenglykol mit zahlenmittlerem Molekulargewicht kleiner als 500 enthalten, wesentlich weniger aktiv sind als die erfindungsgemäßen Katalysatoren. Die Polyetherpolyol-Herstellung ist deshalb nur mit den erfindungsgemäßen Katalysatoren auch bei sehr niedrigen Konzentrationen (15 ppm) möglich.

## Patentansprüche

1. Doppelmetallcyanid (DMC)-Katalysatoren, enthaltend
a) eine Doppelmetallcyanid-Verbindung sowie
b) einen von c) verschiedenen organischen Komplexliganden,
**dadurch gekennzeichnet, daß** sie bis 80 Gew.-%, bezogen auf die Menge des fertigen Katalysators, eines c) Ethylenoxid-Polyethers mit zahlenmittlerem Molekulargewicht größer als 500 enthalten.

2. DMC-Katalysatoren nach Anspruch 1, **dadurch gekennzeichnet, daß** die Doppelmetallcyanid-Verbindung Zinkhexacyanocobaltat(III) ist.

3. DMC-Katalysatoren nach Anspruch 1, **dadurch gekennzeichnet, daß** der organische Komplexligand tert.-Butanol ist.

4. DMC-Katalysatoren nach Ansprüchen 1 bis 3, **dadurch gekennzeichnet, daß** sie 10 bis 60 Gew.-% eines Ethylenoxid-Polyethers mit zahlenmittlerem Molekulargewicht größer als 500 enthalten.

5. DMC-Katalysatoren nach Ansprüchen 1 bis 4, **dadurch gekennzeichnet, daß** sie Hydroxy-Endgruppen aufweisende Ethylenoxid-Polyether mit Hydroxy-Funktionalitäten von 1 bis 8 mit zahlenmittleren Molekulargewichten zwischen 500 und 10⁷ enthalten.

6. DMC-Katalysatoren nach Ansprüchen 1 bis 5, **dadurch gekennzeichnet, daß** sie Ethylenoxid-Polyether mit Hydroxy-Funktionalitäten von 1 bis 3 mit zahlenmittleren Molekulargewichten zwischen 500 und 5·10⁴ enthalten.

7. DMC-Katalysatoren nach Ansprüchen 1 bis 4, **dadurch gekennzeichnet, daß** sie Blockcopolymere enthalten, in denen Blöcke aus Polyvinyl-Verbindungen verknüpft sind mit Polyethylenoxid-Blöcken mit zahlenmittleren Molekulargewichten größer als 500.

8. Verfahren zur Herstellung der DMC-Katalysatoren nach Anspruch 1, **dadurch gekennzeichnet, daß** man in wäßriger Lösung Metallsalze im Überschuß mit Metallcyanidsalzen in Gegenwart des organischen Komplexliganden und des Ethylenoxid-Polyethers umsetzt, den erhaltenen Katalysator isoliert, wäscht und anschließend trocknet.

9. Verwendung des DMC-Katalysators nach Anspruch 1 zur Herstellung von Polyetherpolyolen durch Polyaddition von Alkylenoxiden an aktive Wasserstoffatome aufweisende Starterverbindungen.

## Claims

1. Double metal cyanide (DMC) catalysts consisting of
a) a double metal cyanide compound and
b) an organic coordination ligand which is different from c),
which are **characterised in that** they contain 5 to 80 wt.%, with respect to the amount of final catalyst, of c) an ethylene oxide polyether with a number average molecular weight greater than 500.

2. DMC catalysts according to Claim 1, **characterised in that** the double metal cyanide compound is zinc hexacyanocobaltate(III).

3. DMC catalysts according to Claim 1, **characterised in that** the organic coordination ligand is tert.-butanol.

4. DMC catalysts according to Claims 1 to 3, **characterised in that** they contain 10 to 60 wt.% of an ethylene oxide polyether with a number average molecular weight greater than 500.

5. DMC catalysts according to Claims 1 to 4, **characterised in that** they contain ethylene oxide polyethers with hydroxy terminal groups and hydroxy-functionalities of 1 to 8 with number average molecular weights between 500 and 10⁷.

6. DMC catalysts according to Claims 1 to 5, **characterised in that** they contain ethylene oxide polyethers with hydroxy functionalities of 1 to 3 and number average molecular weights between 500 and 5 x 10⁴.

7. DMC catalysts according to Claims 1 to 4, **characterised in that** they contain block copolymers in which blocks of polyvinyl compounds are linked to polyethylene oxide blocks with number average molecular weights greater than 500.

8. A process for preparing DMC catalysts according to Claim 1, **characterised in that** metal salts in excess are reacted with metal cyanide salts in aqueous solution, in the presence of the organic coordination ligand and the ethylene oxide polyether, the catalyst obtained is isolated, washed and then dried.

9. Use of the DMC catalyst according to Claim 1 to prepare polyetherpolyols by polyaddition of alkylene oxides to starter compounds containing active hydrogen atoms.

## Revendications

1. Catalyseurs à base de cyanures métalliques doubles CMD contenant
a) un cyanure métallique double, et
b) un ligand de complexe organique autre que le composant c) ci-après,
**caractérisés** en qu'ils contiennent c) de 5 à 80 % en poids, par rapport au poids du catalyseur fini, d'un polyéther de l'oxyde d'éthylène à un poids moléculaire moyen, moyenne en nombre, supérieur à 500.

2. Catalyseurs à base de CMD selon la revendication 1, **caractérisés en ce que** le cyanure métallique double est l'hexacyano-cobaltate(III) de zinc.

3. Catalyseurs à base de CMD selon la revendication 1, **caractérisés en ce que** le ligand de complexe organique et le tert-butanol.

4. Catalyseurs à base de CMD selon les revendications 1 à 3, **caractérisés en ce qu'**ils contiennent de 10 à 60 % en poids d'un polyéther de l'oxyde d'éthylène à un poids moléculaire moyen, moyenne en nombre, supérieur à 500.

5. Catalyseurs à base de CMD selon les revendications 1 à 4, **caractérisés en ce qu'**ils contiennent un polyéther de l'oxyde d'éthylène à groupes terminaux hydroxy et à une fonctionnalité en groupes hydroxy de 1 à 8, avec un poids moléculaire moyen, moyenne en nombre, de 500 à 10⁷.

6. Catalyseurs à base de CMD selon les revendications 1 à 5, **caractérisés en ce qu'**ils contiennent un polyéther de l'oxyde d'éthylène à une fonctionnalité en groupes hydroxy de 1 à 3 et à un poids moléculaire moyen, moyenne en nombre, de 500 à 5 x 10⁴.

7. Catalyseurs à base de CMD selon les revendications 1 à 4, **caractérisés en ce qu'**ils contiennent un copolymère séquencé dans lequel des blocs de dérivés polyvinyliques sont reliés à des blocs d'oxyde de polyéthylène, à un poids moléculaire moyen, moyenne en nombre supérieur à 500.

8. Procédé pour la préparation des catalyseurs à base de CMD selon la revendication 1, **caractérisé en ce que** l'on fait réagir une solution aqueuse d'un sel métallique en excès avec une solution aqueuse d'un cyanure métallique en présence du ligand de complexe organique et du polyéther de l'oxyde d'éthylène, on isole le catalyseur obtenu, on le lave et on le sèche.

9. Utilisation du catalyseur à base de CMD selon la revendication 1, pour la préparation de polyéther-polyols par polyaddition d'oxydes d'alkylène sur des composés de départ de condensation contenant des atomes d'hydrogène actif.
